# EUROPÄISCHE PATENTSCHRIFT

(11) **EP 3 164 295 B1**
(45) Veröffentlichungstag und Bekanntmachung des Hinweises auf die Patenterteilung: **20.05.2020**
(21) Anmeldenummer: 15733713.0
(22) Anmeldetag: 01.07.2015
(51) Int. Cl.: B60N 2/235

(54) **VORRICHTUNG MIT EINEM SCHWENKHEBEL**
DEVICE HAVING A PIVOT LEVER
DISPOSITIF AVEC LEVIER PIVOTANT

(30) Priorität: 04.07.2014 DE 102014213041
(43) Veröffentlichungstag der Anmeldung: 10.05.2017
(73) Patentinhaber: Bayerische Motoren Werke Aktiengesellschaft, 80809 München (DE)
(72) Erfinder: GÜRBÜZ, Osman, 81477 München (DE)
(86) Internationale Anmeldenummer: PCT/EP2015/064916
(87) Internationale Veröffentlichungsnummer: WO 2016/001269

(56) Entgegenhaltungen:
- DE-A1-102011 085 272
- DE-A1-102012 001 276

## Beschreibung

Die Erfindung betrifft eine Vorrichtung mit einem Schwenkhebel.

Vorrichtungen mit einem Schwenkhebel sind im Stand der Technik hinlänglich bekannt. Auf dem Gebiet der Kraftfahrzeuge werden sie beispielsweise bei kinematischen Verstellungen, wie einer Sitzhöhenverstellung, einer Lehnenneigungsverstellung, einer Sitzneigungsverstellung usw. eingesetzt oder wenn es darum geht, eine Linearbewegung in eine Rotationsbewegung umzusetzen. Dabei sind die Schwenkhebel in der Regel als einteilige Hebel ausgebildet. Die bedingt jedoch den Nachteil, dass keine richtungsabhängige Momentenübertragung möglich ist, da jede Bewegung des Schwenkhebels infolge seiner einteiligen Ausgestaltung direkt übertragen wird. Dies ist jedoch in manchen Fällen ungünstig, wenn beispielsweise eine Momentenübertragung nur in einer Richtung gewünscht wird.

Aus der DE 102011085272 A1 ist eine Vorrichtung mit einem Schwenkhebel bekannt. Der Schwenkhebel weist einen ersten Schwenkarm und einen zweiten Schwenkarm und ein die beiden Schwenkarme miteinander verbindendes Gelenk auf. Die beiden Schwenkarme weisen sich gegenüberliegende Stirnseiten auf. Jede Stirnseite ist durch das Gelenk in zwei Abschnitte unterteilt.

Es ist daher Aufgabe der vorliegenden Erfindung, eine Vorrichtung mit einem Schwenkhebel bereit zu stellen, welche eine richtungsabhängige Momentenübertragung erlaubt.

Diese Aufgabe wird erfindungsgemäß gelöst durch eine Vorrichtung mit einem Schwenkhebel, der einen ersten Schwenkarm und einen zweiten Schwenkarm und ein die beiden Schwenkarme miteinander verbindendes Gelenk aufweist, wobei die beiden Schwenkarme sich gegenüberliegende Stirnseiten aufweisen, und jede Stirnseite durch das Gelenk in zwei Abschnitte unterteilt ist, die unter einem stumpfen Winkel zueinander ausgerichtet sind.

Infolge der erfindungsgemäßen Ausgestaltung kann je nach Ausgestaltung des Winkels zwischen den beiden Abschnitten eine beliebige richtungsabhängige Momentenübertragung realisiert werden. Die Unteransprüche beinhalten vorteilhafte Weiterbildungen und Ausgestaltungen der Erfindung.

Gemäß einer bevorzugten Ausgestaltung verlaufen die sich gegenüberliegenden Abschnitte der beiden Schwenkarme auf einer ersten Seite des Gelenks parallel zueinander, während die sich gegenüberliegenden Abschnitte der beiden Schwenkarme auf einer zweiten Seite des Gelenks einen Freiwinkel zwischen sich einschließen. Dies führt dazu, dass eine Schwenkbewegung des ersten Schwenkarms in eine erste Richtung direkt auf den zweiten Schwenkarm übertragen wird, während eine Schwenkbewegung des ersten Schwenkarms in eine der ersten Richtung entgegengesetzte zweite Richtung erst nach Überwindung des Freiwinkels auf den zweiten Schwenkarm übertragen wird. Je nach Größe des Freiwinkels kann somit erreicht werden, dass ein Moment bzw. eine Schwenkbewegung des ersten Schwenkarms erst verzögert oder auch gar nicht auf den zweiten Schwenkarm übertragen wird.

Gemäß einer Ausgestaltung schließen die sich gegenüberliegenden Abschnitte der beiden Schwenkarme auf beiden Seiten des Gelenks einen Freiwinkel zwischen sich ein. Diese Anordnung führt dazu, dass eine Schwenkbewegung des ersten Schwenkarms in die erste Richtung erst verzögert auf den zweiten Schwenkarm übertragen wird, während bei einer Schwenkbewegung des ersten Schwenkarms in die zweite Richtung je nach Größe des Freiwinkels das Moment verzögert oder auch gar nicht auf den zweiten Schwenkarm übertragen wird.

Nach einer nicht erfindungsgemäßen Ausführung ist der erste Schwenkarm an seinem von dem Gelenk abgewandten Ende mit einem linear geführten Zughebel verbunden. Bevorzugt ist der zweite Schwenkarm an seinem von dem Gelenk abgewandten Ende an einer Drehachse befestigt. Dabei ruft vorteilhafterweise eine Linearbewegung des Zughebels eine Schwenkbewegung zumindest des ersten Schwenkarms hervor. Mithilfe dieser Anordnung ist es möglich, eine Linearbewegung des Zughebels in eine Rotationsbewegung des Schwenkhebels bzw. der Schwenkachse zu übertragen.

Weitere Einzelheiten, Merkmale und Vorteile der Erfindung ergeben sich aus der nachfolgenden Beschreibung anhand der Zeichnungen. Es zeigen:
Figur 1 eine Prinzipdarstellung der erfindungsgemäßen Vorrichtung,
Figur 2 die erfindungsgemäße Vorrichtung in einer ersten Stellung, und
Figur 3 die erfindungsgemäße Vorrichtung in einer zweiten Stellung. In den Figuren wird die erfindungsgemäße Vorrichtung am Beispiel eines Fahrzeugsitzes mit einer Einstiegshilfe für Font-Passagiere beschrieben und erläutert.

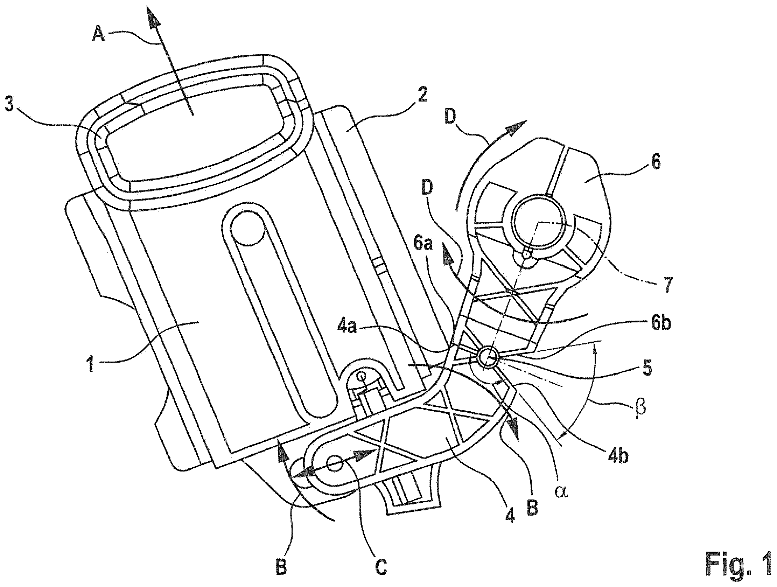

An einem Fahrzeugsitz ist ein Zughebel 1 gelagert, der in einer Linearführung 2 geführt ist. Der Zughebel 1 weist an seinem einen Ende einen Griff 3 auf. An seinem dem Griff 2 gegenüberliegenden Ende ist der Zughebel 1 mit einem ersten Schwenkarm 4 eines Schwenkhebels derart verbunden, dass eine Bewegung des Zughebels 1 in Richtung des Pfeils A (nach oben in Figur 1) zu einer Schwenkbewegung des ersten Schwenkarms 4 in eine erste Richtung gemäß den Pfeilen B (im Uhrzeigersinn) führt. Dabei kann sich der Lagerpunkt des ersten Schwenkarms 4 an dem Zughebel 1 in Richtung des Doppelpfeils C in einem Langloch des Zughebels 1 bewegen.

Der erste Schwenkarm 4 ist über ein Gelenk 5 mit einem zweiten Schwenkarm 6 verbunden, der auf seinem dem Gelenk 5 abgewandten Ende mit einer Drehachse 7 gekoppelt ist.

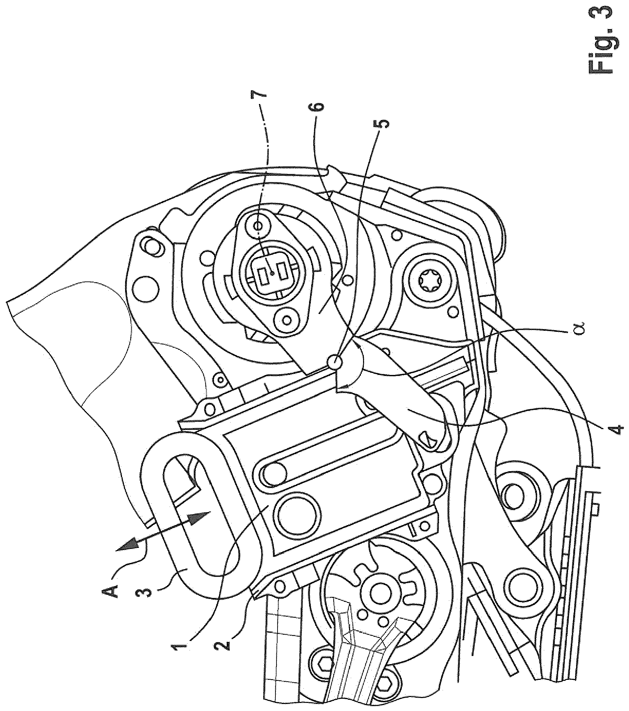

Die beiden Schwenkarme 4, 6 weisen sich gegenüberliegende Stirnseiten auf, und jede Stirnseite ist durch das Gelenk 5 in zwei Abschnitte 4a, 4b und 6a, 6b unterteilt ist, die jeweils unter einem stumpfen Winkel α (Figur 1 und Figur 3) zueinander ausgerichtet sind.

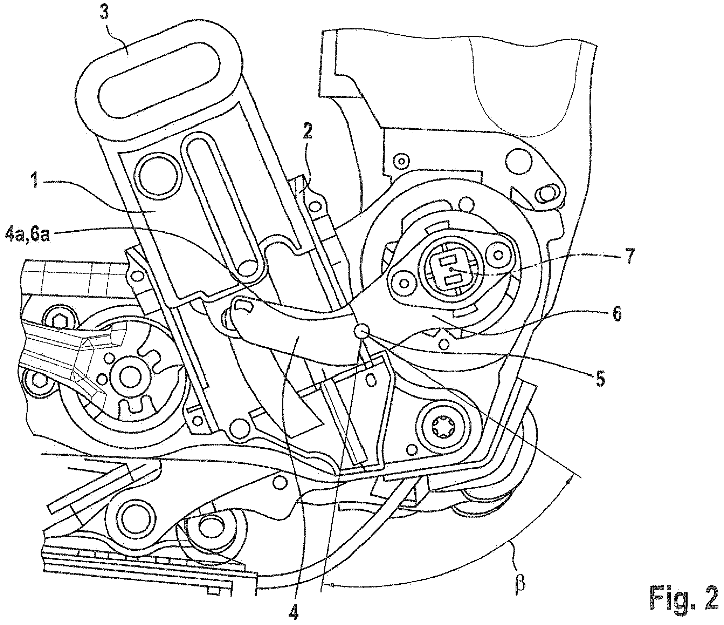

In dem in Figur 1 dargestellten Ausführungsbeispiel verlaufen die sich gegenüberliegenden Abschnitte 4a und 6a der beiden Schwenkarme 4, 6 auf einer ersten Seite des Gelenks 5 parallel zueinander, während die sich gegenüberliegenden Abschnitte 4b und 6b der beiden Schwenkarme 4, 6 auf einer zweiten Seite des Gelenks 5 einen Freiwinkel β (Figur 1 und Figur 2) zwischen sich einschließen.

Infolge dieser Ausgestaltung wird eine Schwenkbewegung des ersten Schwenkarms 4 in Richtung der Pfeile B direkt auf den zweiten Schwenkarm 6 übertragen, der dann in Richtung der Pfeile D (im Uhrzeigersinn) verschwenkt wird.

In Figur 1 ist eine Stellung gezeigt, in welcher sich der Zughebel 1 in einer unteren Position befindet. Wird der Zughebel 1 nunmehr aus der in Figur 1 gezeigten Position in die in Figur 2 gezeigte obere Position gezogen, wird der erste Schwenkarm 4 in Richtung der Pfeile B verschwenkt. Da die sich gegenüberliegenden Abschnitte 4a, 6a der beiden Schwenkarme 4, 6 auf der ersten Seite des Gelenks 5 parallel zueinander verlaufen, wird eine Schwenkbewegung des ersten Schwenkarms 4 direkt in eine Schwenkbewegung des zweiten Schwenkarms 6 in Richtung der Pfeile D übertragen. Dadurch kann die Drehachse 7 verschwenkt und beispielsweise ein Mechanismus zur Entriegelung einer Rückenlehne freigegeben werden.

Wird der Zughebel 1 nunmehr wieder in seine in Figur 3 gezeigte untere Position überführt, wird der erste Schwenkarm 4 entgegen Richtung der der Pfeile B (im Gegenuhrzeigersinn) verschwenkt. Dabei entfernen sich die sich gegenüberliegenden Abschnitte 4a, 6a der beiden Schwenkarme 4, 6 auf der ersten Seite des Gelenks 5 voneinander, während sich die sich gegenüberliegenden Abschnitte 4b, 6b der beiden Schwenkarme 4, 6 auf der zweiten Seite des Gelenks 5 aneinander annähern (Figur 3).

Über die Größe des Freiwinkels β kann eingestellt werden, ob die Schwenkbewegung des ersten Schwenkarms 4 überhaupt nicht oder erst verzögert auf den zweiten Schwenkarm 6 übertragen werden soll. Alternativ zu der in den Figuren dargestellten Ausführungsform können auch die sich auf der ersten Seite des Gelenks 5 gegenüberliegenden Abschnitte 4a, 6a einen Freiwinkel zwischen sich einschließen, so dass dann auf beiden Seiten des Gelenks 5 ein Freiwinkel zwischen den sich gegenüberliegenden Abschnitte 4a, 6a und 4b, 6b der beiden Schwenkarme 4, 5 vorhanden ist. Wenn dies der Fall ist, wird eine Schwenkbewegung des ersten Schwenkarms 5 in Richtung der Pfeile B je nach Größe des Freiwinkels auch erst mehr oder weniger verzögert auf den zweiten Schwenkarm 6 übertragen. Die vorhergehende Beschreibung der vorliegenden Erfindung dient nur zu illustrativen Zwecken und nicht zum Zwecke der Beschränkung der Erfindung. Im Rahmen der Erfindung sind entsprechend der Ansprüche verschiedene Änderungen und Modifikationen möglich, ohne den Umfang der Erfindung zu verlassen.

### Bezugszeichenliste

- 1: Zughebel
- 2: Linearführung
- 3: Griff
- 4: erster Schwenkarm
- 5: Gelenk
- 6: zweiter Schwenkarm
- 7: Drehachse
- A: Pfeil
- B: Pfeil
- C: Pfeil
- D: Pfeil
- α: stumpfer Winkel
- β: Freiwinkel

## Patentansprüche

1. Vorrichtung mit einem Schwenkhebel, der einen ersten Schwenkarm (4) und einen zweiten Schwenkarm (6) und ein die beiden Schwenkarme (4, 6) miteinander verbindendes Gelenk (5) aufweist, wobei die beiden Schwenkarme (4, 6) sich gegenüberliegende Stirnseiten aufweisen, und jede Stirnseite durch das Gelenk (5) in zwei Abschnitte (4a, 4b; 6a, 6b) unterteilt ist, **dadurch gekennzeichnet, dass** die beiden Abschnitte (4a, 4b; 6a, 6b) unter einem stumpfen Winkel (α) zueinander ausgerichtet sind, dass die sich gegenüberliegenden Abschnitte (4a, 6a) der beiden Schwenkarme (4, 6) auf einer ersten Seite des Gelenks (5) parallel zueinander verlaufen, und dass die sich gegenüberliegenden Abschnitte (4b, 6b) der beiden Schwenkarme (4, 6) auf einer zweiten Seite des Gelenks (5) einen Freiwinkel (β) zwischen sich einschließen.

2. Vorrichtung nach Anspruch 1, **dadurch gekennzeichnet, dass** die sich gegenüberliegenden Abschnitte (4a, 6a; 4b, 6b) der beiden Schwenkarme (4, 6) auf beiden Seiten des Gelenks (5) einen Freiwinkel (β) zwischen sich einschließen.

3. Vorrichtung nach einem der vorhergehenden Ansprüche, **dadurch gekennzeichnet, dass** der zweite Schwenkarm (6) an seinem von dem Gelenk (5) abgewandten Ende an einer Drehachse (7) befestigt ist.

4. Vorrichtung nach einem der Ansprüche 2 bis 3, **dadurch gekennzeichnet, dass** eine Linearbewegung des Zughebels (1) eine Schwenkbewegung zumindest des ersten Schwenkarms (4) hervorruft.

## Claims

1. A device with a pivot lever which has a first pivot arm (4) and a second pivot arm (6) and an articulation (5) which connects the two pivot arms (4, 6) together, wherein the two pivot arms (4, 6) have opposing end faces, and each end face is divided by the articulation (5) into two portions (4a, 4b; 6a, 6b), **characterised in that** the two portions (4a, 4b; 6a, 6b) are oriented at an obtuse angle (α) to each other, **in that** the opposing portions (4a, 6a) of the two pivot arms (4, 6) on a first side of the articulation (5) run parallel to each other, and **in that** the opposing portions (4b, 6b) of the two pivot arms (4, 6) on a second side of the articulation (5) enclose a clearance angle (β) between them.

2. A device according to Claim 1, **characterised in that** the opposing portions (4a, 6a; 4b, 6b) of the two pivot arms (4, 6) on both sides of the articulation (5) enclose a clearance angle (β) between them.

3. A device according to one of the preceding claims, **characterised in that** the second pivot arm (6) on its end facing away from the articulation (5) is fastened to an axis of rotation (7).

4. A device according to one of Claims 2 to 3, **characterised in that** a linear movement of the pull lever (1) causes a pivoting movement at least of the first pivot arm (4).

## Revendications

1. Dispositif comportant un premier bras pivotant (4) et un second bras (6) ainsi qu'une articulation (5) reliant entre eux les deux bras pivotant (4, 6),
les deux bras pivotants (4, 6) ayant des côtés frontaux qui se font face et chaque côté frontal est subdivisé par l'articulation (5) en deux segments (4a, 4b ; 6a, 6b),
dispositif **caractérisé en ce que**
les deux segments (4a, 4b ; 6a, 6b) font entre eux un angle obtus (α), les segments (4a, 6a) qui se font face des deux bras pivotants (4, 6) se rejoignant parallèlement l'un l'autre sur un premier côté de l'articulation (5), et
les segments (4b, 6b) qui se font face des deux bras pivotants (4, 6) sur un second côté de l'articulation (5) font entre eux un angle libre (β).

2. Dispositif selon la revendication 1,
**caractérisé en ce que**
les segments (4a, 6a ; 4b, 6b) qui se font face des deux bras pivotants (4, 6) sur les deux côtés de l'articulation (5) font entre eux un angle libre (β).

3. Dispositif selon l'une des revendications précédentes,
**caractérisé en ce que**
le second bras pivotant (6) porte un axe de rotation (7) à son extrémité opposée à l'articulation (5).

4. Dispositif selon l'une des revendications 2 à 3,
**caractérisé en ce qu'**
un mouvement linéaire du levier de traction (1) produit un mouvement de pivotement au moins du premier bras pivotant (4).
